# EUROPEAN PATENT APPLICATION

(11) **EP 2 680 659 A1**
(43) Date of publication of application: **01.01.2014**
(21) Application number: 13185997.7
(22) Date of filing: 26.09.2008
(51) Int. Cl.: H04W 74/08, H04W 72/14

(54) **Method and apparatus for managing a collision in common E-DCH transmissions**

(30) Priority: 27.09.2007 US 975566 P
(62) Divisional of application: 08833129.3
(71) Applicant: Interdigital Patent Holdings, Inc., Wilmington, DE 19809 (US)
(72) Inventor: Roy, Vincent, Longueuil, Québec J3N 1N3 (CA); Marinier, Paul, Brossard, Québec J4X 2J7 (CA); Pelletier, Benoit, Roxboro, Québec H8Y 1L3 (CA); Cave, Christopher R., Montreal, Québec H9A 3J2 (CA); Digirolamo, Rocco, Laval, Québec H7K 3Y3 (CA)
(74) Representative: Hjalmarsson, Magnus Axel

(57) **Abstract**

A method and apparatus for managing a collision in random access channel (RACR) access transmissions are disclosed. A wireless transmit/receive unit (WTRU) transmits WTRU-dependent information to confirm that a detected acquisition indicator (AI) is intended to the WTRU. The WTRU-dependent infonnation may be transmitted separately after detecting the Al, may be transmitted along with a RACH preamble, or may be sent in an E-RACH message. The WTRU-dependent information may be a random number, a sequence or scrambling code randomly selected from a pre-determined set of sequences or scrambling codes.

Alternatively, the WTRU-dependent information may be a pre-configured identifier, or information derived from the pre-configured identifier. Alternatively, after detecting an AI, the WTRU may randomly select an enhanced dedicated channel (E-DCH) resource from a set of E-DCH resources associated with an RACH resource used for transmission of the RACH preamble and transmit an E-RACH message using the selected E-DCH resource.

## Description

FIELD OF INVENTION

This application is related to wireless communications.

BACKGROUND

A random access channel (RANCH) is a shared channel used for an initial access to obtain dedicated resources or to transmit small amount of data. Because the RACH is shared and the access is random among wireless transmit/receive units (WTRUs), there is a possibility of collision between two or more WTRUs trying to access a channel simultaneously.

In the Release 7 of third generation partnership project (3GPP) specifications, the RACH procedure has two stages - a slotted-ALOHA mechanism with channel access indication followed by a RACH message transmission stage. A WTRU that wants to access the channel, randomly selects a signature and transmits a RACH preamble during a randomly selected access slot at a certain transmit power. If the Node B detects the signature and if an associated resource is free, the Node B transmits a positive acknowledgement (ACK) on an acquisition indicator channel (AICH). After receiving an acquisition indicator (AI), (i.e., ACK), on the AICH, the WTRU may proceed to the second stage and transmit a RACH message. If the associated resource is unavailable, the Node B responds with a negative acknowledgement (NACK) on the AICH. This triggers a backoff mechanism at the WTRU, which essentially restarts the RACH access procedure at a later random time. On the other hand, if the signature from the WTRU is not detected at the Node B, no AI is transmitted on the AICH. If the WTRU fails to receive an AI after transmission of the RACH preamble, the WTRU tries again in a subsequent access slot with a higher transmit power, up to the maximum number.

Since the signature is chosen randomly from a list of available signatures and the RACH access procedure is anonymous, the Node B does not know which WTRU is accessing the channel until the Node B decodes the RACH message. Therefore, when two or more WTRUs happen to chose the same signature in the same access slot and one of them is detected by the Node B, the Node B will transmit an ACK and the WTRUs will access the channel simultaneously to transmit RACH messages. This causes a collision on the RACH messages. When a collision occurs, the RACH messages might be retransmitted. Collisions may be difficult to detect and incur additional delays.

Recently, it has been proposed to modify the random access transport mechanism by transmitting the RACH message via an enhanced dedicated channel (E-DCH). The procedure is known as enhanced uplink for CELL_FACH and IDLE mode. The Node B would choose an E-DCH from a set of common E-DCH resources that are to be shared amongst all WTRUs. The Node B responds to a WTRU channel access request by assigning one of these resources and notifying the WTRU through the AICH and/or through an enhanced AICH (E-AICH). After reception of the AI, the WTRU starts monitoring the uplink power control commands, and begins transmitting the downlink power control commands, and after a network configurable delay, starts the transmission over the E-DCH transport channel.

This approach would allow larger data messages to be transmitted with lower latency than what is possible with the conventional RACH. In effect, the E-DCH will likely be used for a longer period of time for data transmission. This will increase the impact that the message collisions would have on the latencies perceived by a user and on the system's spectral efficiency. Therefore, it would be desirable to provide a method for avoiding, managing, and identifying collisions.

SUMMARY

A method and apparatus for managing a collision in the enhanced uplink transmissions in a CELL_FACH state or in an idle mode are disclosed A WTRU transmits WTRU-dependent information to allow the Node B to identify which WTRU detected an acquisition indicator (AI). The WTRU-dependent information may be transmitted separately after detecting the AI or may be transmitted along with a RACH preamble. The WTRU-dependent information may be sent during the E-RACH message transmission stage via an E-DCH. The WTRU-dependent information may be a random number, or a sequence or scrambling code randomly selected from a pre-determined set of sequences or scrambling codes. Alternatively, the WTRU-dependent information may be a pre-configured identifier, or information derived from the pre-configured identifier. Alternatively, after detecting an AI, the WTRU may randomly select an E-DCH resource from a set of E-DCH resources associated with an RACH resource used for transmission of the RACH preamble and transmit an E-RACH message using the selected E-DCH resource. Alternatively, a confirmation response may be sent in response to the E-RACH message.

BRIEF DESCRIPTION OF THE DRAWINGS

A more detailed understanding may be had from the following description, given by way of example in conjunction with the accompanying drawings wherein:

Figure 1 shows example signaling between a WTRU and a Node B for RACH access in accordance with one embodiment;

Figure 2 shows example signaling between a WTRU and a Node B for RACH access in accordance with another embodiment; and

Figure 3 shows example signaling between a WTRU and a Node B for RACH access in accordance with another embodiment.

DETAILED DESCRIPTION

When referred to hereafter, the terminology "WTRU" includes but is not limited to a user equipment (UE), a mobile station, a fixed or mobile subscriber unit, a pager, a cellular telephone, a personal digital assistant (PDA), a computer, or any other type of user device capable of operating in a wireless environment. When referred to hereafter, the terminology "Node B" includes but is not limited to a base station, a site controller, an access point (AP), or any other type of interfacing device capable of operating in a wireless environment. When referred to hereafter, the terminology "acquisition indicator (AI) on the acquisition indicator channel (AICH)" includes any reception of an acquisition indication on the AITCH and/or the E-AICH. When referred to hereafter, the terminology "Acquisition Indication" includes but is not limited to an ACK/NACK indication or a common E-DCH resource indication. When referred to hereafter, the terminology "E-RACH message" includes all data (packets or protocol data units (PDUs)) transmitted on a common E-DCH resource after an acknowledged RACH preamble stage. The terms indication and indicator may be used interchangeably herein.

It should be noted that while embodiments are described in the context of 3GPP universal terrestrial radio access (UTRA) frequency division duplex (FDD), the embodiments may also be applied to any other wireless communication technologies.

In accordance with one embodiment, a WTRU transmits WTRU-dependent information after detecting an AI on the AICH allowing a Node B to determine which WTRU detected the AI

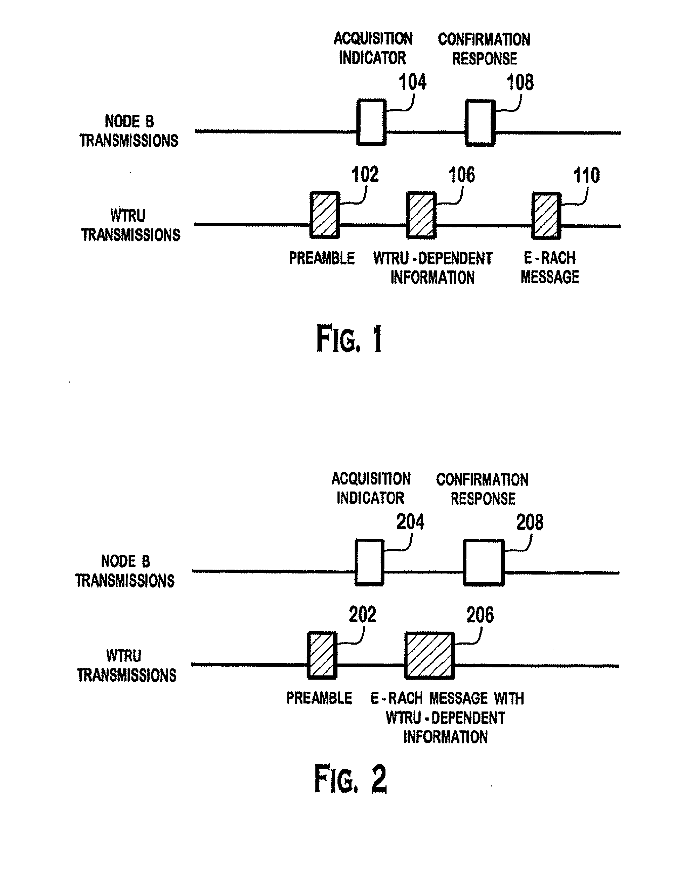

Figure 1 is an example signaling diagram between a WTRU and a Node B for the new enhanced uplink for CELL_FACH and Idle mode procedure. For initiating the procedure, a WTRU selects a RACH signature and an access slot randomly, and transmits an RACH preamble 102. This RACH preamble 102 may or may not be successfully received at the Node B. The Node B detects a RACH preamble and transmits an AI 104 on the AICH. The RACH preamble detected by the Node B may be the RACH preamble 102 sent by this WTRU or may be a RACH preamble from another WTRU.

A collision would occur if the WTRU proceeds with transmission of an E-RACH message in case that the RACH preamble 102 transmitted by this WTRU is not successfully detected by the Node B and the AI 104 is actually a response to a RACH preamble with the same signature and transmitted in the same access slot by another WTRU. The collision will have more negative impacts, (e.g., waste of radio resources), on the system than if the WTRU would have detected the collision and stopped the transmission of the E-RACH message part.

To mitigate the impacts of the collision, after detecting the AI 104, the WTRU transmits WTRU-dependent information 106 to allow the Node B to confirm the identity of the WTRU that detected the AI 104. The Node B receives the WTRU-dependent information 106 and transmits a confirmation response 108 to the WTRU. Based on the confirmation response, the WTRU determines that the AI is intended to that WTRU or to another WTRU. If it is determined that the detected AI 104 is intended to the WTRU, the WTRU transmits an E-RACH message 110, However, ifit is determined that the AI 104 is not intended to the WTRU, the WTRU does not transmit the E-RACH message 110.

This determination may be made by monitoring the confirmation response. If the WTRU does not receive the expected response within a collision resolution time, the WTRU may declare that a collision has occurred and that the received AI was for another WTRU.

In order to determine if the collision resolution time has expired, numerous triggers may be used to tell the WTRU to begin monitoring the confirmation response. These include the reception of the AI and resource indication on the AICH and/or E-AICH, the start of reception of the uplink power control commands, the start of transmission of the downlink power control commands, the time the WTRU declares the physical channel established, the time the WTRU declares that the physical channel has passed post-verification, and the start of E-DCH transmissions on the uplink.

If two or more WTRUs happen to transmit a RACH preamble using the same signature and at the same access slot, the WTRUs will detect the AI 104 and transmit WTRU-dependent information to the Node B, respectively. In this case, the Node B may or may not receive all the WTRU-dependent information. If the Node B receives only one of them the Node responds to the received one as stated above. If the node B detects multiple WTRU-dependent information, the Node B may respond to only one of them, (e.g., one with the best signal quality).

The WTRU-dependent information is intended to distinguish WTRUs. The WTRU-dependent information may be generated randomly. The WTRU-dependent information may be a random number, a sequence or signature randomly selected from a pre-determined set of sequences or signatures, a scrambling code randomly selected from a pre-determined set of scrambling codes, a timing relative to downlink signaling to determine the time at which the WTRU will transmit the WTRU-dependent information, or the like. Different timing of the WTRU-dependent transmissions may be used to distinguish between the WTRUs. After the WTRUs receive the AI, the WTRUs each randomly select a time to transmit the WTRU-dependent information. If the Node B only responds to one of these and maintains a strict timing for the response, each WTRU will be able to determine if the confirmation response is destined for the WTRU.

Alternatively, the WTRUdependent information may correspond to, or be generated from, a pre-configured WTRU identifier including, but not limited to, UTRAN radio network temporary identity (U-RNTI), E-DCH radio network temporary identity (E-RNTI), high speed downlink shared channel (HS-DSCH) radio network temporary identity (H-RNTI), international mobile subscriber identity (IMSI), etc.

The WTRU-dependent information may be transmitted through a channel dedicated for this confirmation procedure. Alternatively, the WTRU-dependent information may be transmitted as a payload of any conventional uplink channel message.

Alternatively, the WTRU-dependent information may be sent as part of the E-RACH message as shown in Figure 2. For initiating a RACH access procedure, a WTRU selects a RACH signature and an access slot randomly, and transmits an RACH preamble 202. The Node B detects the RACH preamble 202 and transmits an AI 204 on the AICH. The WTRU, after detecting the AI 204, transmits WTRU-dependent information in the E-RACH message 206. The Node B then transmits a confirmation response 208 to the WTRU. Based on the confirmation response 208, the WTRU can determine whether or not a collision occurs.

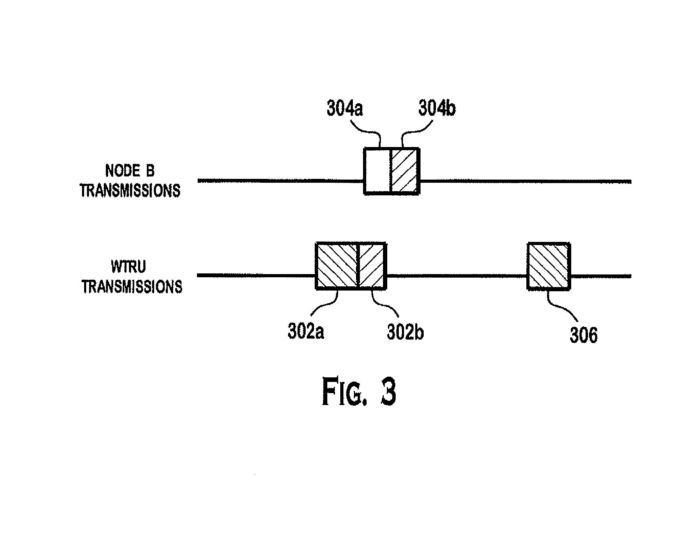

Alternatively, as shown in Figure 3, the WTRU-dependent information may be transmitted immediately following each RACH preamble. For initiating a RACH access procedure, a WTRU selects a RACH signature and an access slot randomly, and transmits an RACH preamble 302a along with WTRU-dependent information 302b. The Node B detects the RACH preamble 302a and the WTRU-dependent information 302b and transmits an AI 304a and confirmation response 304b on the AICH. After confirming that the AI 304a is intended to the WTRU based on the confirmation response 304b, the WTRU transmits an E-RACH message 306.

The Node B may transmit the confirmation response to the WTRU through an HS-DSCH. The confirmation response may comprise a repetition of the WTRU-dependent information or information derived from the WTRU-dependent information, (e.g., cyclic redundancy check (CRC) checksum). In case that the WTRU has not been assigned a dedicated H-RNTI, the confirmation response may be transmitted using a common H-RNTI. In case that the WTRU has already been assigned a dedicated H-RNTI, a transmission from the Node B using the dedicated H-RNTI of the WTRU may be considered as a confirmation response.

Alternatively, the Node B may transmit the confirmation response through an E-DCH absolute grant channel (E-AGCH). An E-AGCH is a channel for transmitting an absolute grant for E-DCH. If the WTRU has already been assigned a dedicated E-RNTI and the Node B can map the E-RNTI and the WTRU-dependent information, the E-AGCH may be used to transmit an absolute grant value to the WTRU after receiving the WTRU-dependent information. If the WTRU receives an absolute grant with its E-RNTI via the E-AGCH after transmitting the WTRU-dependent information, the WTRU knows that it is free to use the common E-DCH resource without the possibility of collision.

In case that the WTRU has not been assigned an E-RNTI, the transmission of the confirmation response may be done using a common E-RNTI where the absolute grant value 5+1 bits may be set according to a pre-determined mapping between the WTRU-dependent information transmitted by the WTRU and a set of bit sequences.

Alternatively, the Node B may transmit the confirmation response through an E-DCH relative grant channel (E-RGCH). The mechanism of using the E-RGCH for confirmation response is similar to using the E-AGCH except that the E-RGCH does not use an E-RNTI to identify the WTRU to which a given grant is sent, but uses a combination of a channelization code and a sequence, (i.e., signature).

Alternatively, the Node B may transmit the confirmation response through the AICH. In case that the WTRU-dependent information includes a signature similar to that of the RACH preamble signature or in case that the WTRU-dependent information is sent along with the RACH preambles, the confirmation response may be sent through the AICH. As shown in Figure 3, the confirmation response may be transmitted from the Node B following the AI. In accordance with the current Release 7 3GPP specifications, the AICH transmission is off for 1024 chips after the transmission of 4096 chips of AI. The confirmation response may be transmitted in all or part of the 1024 chips.

In accordance with another embodiment, the E-RACH message collision may be mitigated by having an additional random selection of an E-DCH resource after the WTRU has detected its AI. For example, a one-to-many mapping may be defined between RACH resources and E-DCH resources. That is, every RACH resource is associated with a set E-DCH resources, and each E-DCH resource in the same set may have, for example, a unique scrambling code. After the WTRU receives an AI, the WTRU randomly selects one of the E-DCH resources from the set of E-DCH resources associated with the RACH resource used for transmission of the RACH preamble. In case that two WTRUs transmit the same signature at the same access slot and therefore receive an AI simultaneously, the subsequent random selection of an E-DCH resource will reduce the probability of E-RACH message collision because these WTRUs will be distinguished, for example, by their unique scrambling codes.

In accordance with another embodiment, the conventional RACH preamble and acquisition indication are maintained as in Release 7 3GPP specifications, (i.e., a WTRU transmits an E-RACH message after receiving an AI without an additional step for confirming that the AI is really intended for that WTRU). After the WTRU transmits its E-RACH message, and the WTRU identity can be inferred from the MAC header or message content at the Node B (preferably) or at a serving radio network controller (SRNC). In accordance with this embodiment, the network transmits a confirmation response to the WTRU in response to the E-RACH message. The confirmation response may contain one or more of the following information: WTRU unique identity, confirmation of successful reception or failure of the E-RACH message, additional grant or resource allocation for a dedicated channel, or the like.

The confirmation response may be carried, for example, on the forward access channel (FACH) or HS-DSCH. The WTRU may be addressed using its H-RNTI, E-RNTI or another identity suitable for this purpose and known to both the WTRU and network. Alternatively, a new downlink channel may be created to convey this confirmation response. For example, this new channel may be based on a modified E-AGCH with new interpretation (and possibly a reduction) of the information bits. The E-AGCH carries absolute grant (5 bits) and absolute grant scope (1 bit). The WTRU identity is masked in the 16-bit CRC. If the confirmation response is to include just ACK/NACK information, then not all the 6 bits of the E-AGCH are needed. Rather the grant scope may be reinterpreted to be ACK/NACK, and the 5-bit absolute grant may be removed. This confirmation response may be transmitted to the WTRU with a known timing. This approach may be particularly useful to reduce latencies in the context of unacknowledged mode (UM) data transmission in a CELL_FACH state, where the WTRU already has an identity provided by the network.

Embodiments.

1. A method for avoiding a collision in enhanced uplink for CELL_FACH transmissions.

2. The method of embodiment 1 comprising a WTRU transmitting an RACH preamble.

3. The method of embodiment 2 comprising the WTRU transmitting WTRU-dependent information.

4. The method of embodiment 3 comprising the WTRU receiving a confirmation response.

5. The method of embodiment 4 comprising the WTRU transmitting a message using a common E-DCH resource if it is determined that there is no collision based on the confirmation response.

6. The method as in any one of embodiments 3-5, wherein the WTRU transmits the WTRU-dependent information along with the RACH preamble.

7. The method as in any one of embodiments 3-6, wherein the WTRU-dependent information is at least one of a random number, a sequence randomly selected from a pre-determined set of sequences, and a scrambling code randomly selected from a pre-determined set of scrambling codes.

8. The method as in any one of embodiments 3-7, wherein the WTRU-dependent information is one of a pre-configured identifier and information derived from the pre-configured identifier.

9. The method of embodiment 8 wherein the identifier is at least one of U-RNTI, E-RNTI, H-RNTI, and IMSI,

10. The method as in any one of embodiments 4-9, wherein the WTRU receives the confirmation response through an HS-DSCH.

11. The method as in any one of embodiments 4-10, wherein the confirmation response comprises a repetition of one of the WTRU-dependent information and information derived from the WTRU-dependent information,

12. The method as in any one of embodiments 4-11, wherein the WTRU receives the confirmation response through one of an E-AGCH and an E-RGCH.

13. The method of embodiment 12 wherein an E-RNTI is used as the confirmation response that is included in an E-RNTI specific CRC attachment of the E-AGCH.

14. The method of embodiment 12 wherein an absolute grant for the WTRU is included in the confirmation response sent through the E-AGCH.

15. The method as in any one of embodiments 4-14, wherein the WTRU receives the conformation response through an AICH.

16. The method of embodiment 15 wherein the confirmation response is transmitted in 1024 chips after transmission of 4096 chips of AI.

17. The method as in any one of embodiments 4-16, wherein the WTRU begins to monitor the confirmation response to evaluate a collision resolution time upon one of following triggers: reception of an AI and resource indication, start of reception of uplink power control commands, start of transmission of downlink power control commands, declaration of physical layer channel establishment, declaration on post-verification success, and start of E-DCH transmission.

18. A method for managing a collision in enhanced uplink for CELL_FACH transmissions.

19. The method of embodiment 18 comprising a WTRU transmitting a RACH preamble.

20. The method of embodiment 19 comprising the WTRU receiving an AI.

21. The method of embodiment 20 comprising the WTRU transmitting a packet using a common E-DCH resource including WTRU-dependent information.

22. The method of embodiment 21 comprising the WTRU receiving a confirmation response, wherein the WTRU determines whether a collision occurs based on the confirmation response.

23. The method as in any one of embodiments 21-22, wherein the WTRU-dependent information is at least one of a random number, a sequence randomly selected from a pre-determined set of sequences, and a scrambling code randomly selected from a pre-determined set of scrambling codes.

24. The method as in any one of embodiments 21-23, wherein the WTRU-dependent information is one of a pre-configured identifier and information derived from the pre-configured identifier.

25. The method of embodiment 24 wherein the identifier is at least one of U-RNTI, E-RNTI, H-RNTI, and IMSI.

26. The method as in any one of embodiments 22-25, wherein the WTRU receives the confirmation response through an HS-DSCH.

27. The method as in any one of embodiments 22-26, wherein the confirmation response comprises a repetition of one of the WTRU-dependent information and information derived from the WTRU-dependent information.

28. The method as in any one of embodiments 22-27, wherein the WTRU receives the confirmation response through one of an E-AGCH and an E-RGCH.

29. The method of embodiment 28 wherein an E-RNTI is used as the confirmation response that is included in an E-RNTI specific CRC attachment of the E-AGCH.

30. The method of embodiment 28 wherein an absolute grant for the WTRU is included in the confirmation response sent through the E-AGCH.

31. The method as in any one of embodiments 22-28, wherein the WTRU begins to monitor the confirmation response to evaluate a collision resolution time upon one of following triggers: reception of an AI and resource indication, start of reception of uplink power control commands, start of transmission of downlink power control commands, declaration of physical layer channel establishment, declaration on post-verification success, and start of E-DCH transmission.

32. A method for avoiding a collision in enhanced uplink for CELL_FACH transmissions.

33. The method of embodiment 32 comprising a WTRU transmitting a RACH preamble.

34. The method of embodiment 33 comprising the WTRU receiving an AI.

35. The method of embodiment 34 comprising the WTRU randomly selecting an E-DCH resource from a set of E-DCH resources associated with an RACH resource used for transmission of the RACH preamble.

36. The method of embodiment 35 comprising the WTRU transmitting a message using the selected E-DCH resource.

37. The method of embodiment 36 wherein each E-DCH resource in the set of E-DCH resources has a different scrambling code.

38. A method for detecting a collision in enhanced uplink for CELL_FACH transmissions.

39. The method of embodiment 38 comprising a WTRU transmitting a RACH preamble.

40. The method of embodiment 39 comprising the WTRU receiving an AI.

41. The method of embodiment 40 comprising the WTRU transmitting a message.

42. The method of embodiment 41 comprising the WTRU receiving a confirmation response for the message.

43. The method of embodiment 42 wherein the confirmation response contains at least one of WTRU identity, confirmation of successful reception or failure of the message, and uplink resource allocation for a dedicated channel.

44. The method as in any one of embodiments 42-43, wherein the WTRU receives the confirmation response via one of an FACH and an HS-DSCH.

45. A WTRU for avoiding a collision in enhanced uplink for CELL_FACH transmissions.

46. The WTRU of embodiment 45 comprising a transceiver.

47. The WTRU of embodiment 46 comprising a controlling entity adapted to initiate a random access procedure by transmitting a RACH preamble, transmit WTRU-dependent information, and transmit a message after it is confirmed that there is no collision based on a confirmation response received in response to the WTRU-dependent information.

48. The WTRU of embodiment 47 wherein the controlling entity transmits the WTRU-dependent information along with the RACH preamble.

49. The WTRU as in any one of embodiments 47-48, wherein the WTRU-dependent information is at least one of a random number, a sequence randomly selected from a pre-determined set of sequences, and a scrambling code randomly selected from a pre-determined set of scrambling codes.

50. The WTRU as in any one of embodiments 47-49, wherein the WTRU-dependent information is one of a pre-configured identifier and information derived from the pre-configured identifier.

51. The WTRU of embodiment 50 wherein the identifier is at least one of U-RNTI, E-RNTI, H-RNTI, and IMSI.

52. The WTRU as in any one of embodiments 47-51, wherein the WTRU receives the confirmation response through an HS-DSCH.

53. The WTRU as in any one of embodiments 47-52, wherein the confirmation response comprises a repetition of one of the WTRU-dependent information and information derived from the WTRU-dependent information.

54. The WTRU as in any one of embodiments 47-53, wherein the WTRU receives the confirmation response through one of an E-AGCH and an E-RGCH.

55. The WTRU of embodiment 54 wherein an E-RNTI is used as the confirmation response that is included in an E-RNTI specific CRC attachment of the E-AGCH.

56. The WTRU of embodiment 54 wherein an absolute grant for the WTRU is received via the E-AGCH carrying the confirmation response.

57. The WTRU as in any one of embodiments 47-53, wherein the WTRU receives the confirmation response through an AICH.

58. The WTRU of embodiment 57 wherein the confirmation response is transmitted in 1024 chips after transmission of 4096 chips of AI.

59. The WTRU as in any one of embodiments 47-58, wherein the WTRU begins to monitor the confirmation response to evaluate a collision resolution time upon one of reception of an AI and resource indication, start of reception of uplink power control commands, start of transmission of downlink power control commands, declaration of physical layer channel establishment, declaration on post-verification success, and start of E-DCH transmission.

60. A WTRU for managing a collision in enhanced uplink for CELL_FACH transmissions.

61. The WTRU of embodiment 60 comprising a transceiver.

62. The WTRU of embodiment 61 comprising a controlling entity adapted to initiate a random access procedure by transmitting a RACH preamble, transmit a message using a common E-DCH resource along with WTRU-dependent information, and determine whether a collision occurs based on a confirmation response received in response to the WTRU-dependent information.

63. The WTRU of embodiment 62 wherein the WTRU-dependent information is at least one of a random number, a sequence randomly selected from a pre-determined set of sequences, and a scrambling code randomly selected from a pre-determined set of scrambling codes.

64. The WTRU as in any one of embodiments 62-63, wherein the WTRU-dependent information is one of a pre-configured identifier and information derived from the pre-configured identifier.

65. The WTRU of embodiment 64 wherein the identifier is at least one of U-RNTI, E-RNTI, H-RNTI, and IMSI.

66. The WTRU as in any one of embodiments 62-65, wherein the WTRU receives the confirmation response through an HS-DSCH.

67. The WTRU as in any one of embodiments 62-66, wherein the confirmation response comprises a repetition of one of the WTRU-dependent information and information derived from the WTRU-dependent information.

68. The WTRU as in any one of embodiments 62-67, wherein the WTRU receives the confirmation response through one of an E-AGCH and an E-RGCH.

69. The WTRU of embodiment 68 wherein an E-RNTI is used as the confirmation response that is included in an E-RNTI specific CRC attachment of the E-AGCH.

70. The WTRU of embodiment 68 wherein an absolute grant for the WTRU is received via the E-AGCH carrying the confirmation response.

71. The WTRU as in any one of embodiments 62-70, wherein the WTRU begins to monitor the confirmation response to evaluate a collision resolution time upon one of reception of an AI and resource indication, start of reception of uplink power control commands, start of transmission of downlink power control commands, declaration of physical layer channel establishment, declaration on post-verification success, and start of E-DCH transmission.

72. A WTRU for avoiding a collision in enhanced uplink for CELL_FACH transmissions.

73. The WTRU of embodiment 72 comprising a transceiver.

74. The WTRU of embodiment 73 comprising a controlling entity adapted to randomly select an E-DCH resource from a set of E-DCH resources associated with a RACH resource used for transmission of a RACH preamble and transmit a message using the selected E-DCH resource.

75. The WTRU of embodiment 74 wherein each E-DCH resource in the set of E-DCH resources has a different scrambling code.

76. The WTRU of embodiment 73 comprising a controlling entity adapted to transmit a RACH preamble and a message and determine whether a collision occurs based on a confirmation response for the message.

77. The WTRU of embodiment 76 wherein the confirmation response contains at least one of WTRU identity, confirmation of successful reception or failure of the message, and uplink resource allocation for a dedicated channel.

78. The WTRU as in any one of embodiments 76-77, wherein the WTRU receives the confirmation response via one of an FACH and an HS-DSCH.

79. A method for avoiding a collision in enhanced uplink for CELL_FACH transmissions.

80. The method of embodiment 79 comprising receiving a RACH preamble.

81. The method of embodiment 80 comprising transmitting an AI in response to the received RACH preamble.

82. The method of embodiment 81 comprising receiving WTRU-dependent information.

83. The method of embodiment 82 comprising transmitting a confirmation response in response to the WTRU-dependent information.

84. The method of embodiment 83 wherein the confirmation response is sent along with the AI.

85. The method as in any one of embodiments 83-84, wherein the confirmation response is sent through an HS-DSCH.

86. The method as in any one ofembodiments 83-85, wherein the confirmation response comprises a repetition of one of the WTRU-dependent information and information derived from the WTRU-dependent information.

87. The method as in any one of embodiments 83-86, wherein the confirmation response is sent through one of an E-AGCH and an E-RGCH.

88. The method as in any one ofembodiments 83-87, wherein the confirmation response is sent through an AICH.

89. A method for supporting detection of a collision in enhanced uplink for CELL_FACH transmissions.

90. The method of embodiment 89 comprising receiving a RACH preamble.

91. The method of embodiment 90 comprising transmitting an AI in response to the RACH preamble.

92. The method of embodiment 91 comprising receiving a RACH message.

93. The method of embodiment 92 comprising transmitting a confirmation response for the RACH message.

94. The method of embodiment 93 wherein the confirmation response contains at least one of WTRU identity, confirmation of successful reception or failure of the message, and uplink resource allocation for a dedicated channel.

95. The method as in any one of embodiments 93-94, wherein the confirmation response is sent via one of an FACH and an HS-DSCH.

96. An apparatus for supporting detection of a collision in enhanced uplink for CELL_FACH transmissions.

97. The apparatus of embodiment 96 comprising a transceiver.

98. The apparatus of embodiment 97 comprising a controlling entity configured to transmit a confirmation response in response to WTRU-dependent information for confirming that an AI is intended to a particular WTRU.

99. The apparatus of embodiment 98 wherein the confirmation response is sent along with the AI.

100. The apparatus as in any one of embodiments 98-99, wherein the confirmation response is sent through an HS-DSCH.

101. The apparatus as in any one of embodiments 98-100, wherein the confirmation response comprises a repetition of one of the WTRU-dependent information and information derived from the WTRU-dependent information.

102. The apparatus as in any one of embodiments 98-101, wherein the confirmation response is sent through one of an E-AGCH and an E-RGCH.

103. The apparatus as in any one of embodiments 98-102, wherein the confirmation response is sent through an AICH.

104. The apparatus of embodiment 97 comprising a controlling entity configured to receive a RACH message and transmit a confirmation response for the RACH message.

105. The apparatus of embodiment 104 wherein the confirmation response contains at least one of WTRU identity, confirmation of successful reception or failure of the RACH message, and uplink resource allocation for a dedicated channel.

106. The apparatus as in any one of embodiments 104-105, wherein the confirmation response is sent via one of an FACH and an HS-DSCH.

Although features and elements are described above in particular combinations, each feature or element can be used alone without the other features and elements or in various combinations with or without other features and elements. The methods or flow charts provided herein may be implemented in a computer program, software, or firmware incorporated in a computer-readable storage medium for execution by a general purpose computer or a processor. Examples ofcomputer-readable storage mediums include a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs).

Suitable processors include, by way of example, a general purpose processor, a special purpose processor, a conventional processor, a digital signal processor (DSP), a plurality of microprocessors, one or more microprocessors in association with a DSP core, a controller, a micro controller, Application Specific Integrated Circuits (ASICs), Field Programmable Gate Arrays (FPGAs) circuits, any other type of integrated circuit (IC), and/or a state machine.

A processor in association with software may be used to implement a radio frequency transceiver for use in a wireless transmit receive unit (WTRU), user equipment (UE), terminal, base station, radio network controller (RNC), or any host computer. The WTRU may be used in conjunction with modules, implemented in hardware and/or software, such as a camera, a video camera module, a videophone, a speakerphone, a vibration device, a speaker, a microphone, a television transceiver, a hands free headset, a keyboard, a Bluetooth® module, a frequency modulated (FM) radio unit, a liquid crystal display (LCD) display unit, an organic light-emitting diode (OLED) display unit, a digital music player, a media player, a video game player module, an Internet browser, and/or any wireless local area network (WLAN) or Ultra Wide Band (UWB) module.
A1. A method for avoiding a collision in enhanced uplink for CELL_FACH transmissions, the method comprising:
   a wireless transmitJreceive unit (WTRU) transmitting a random access channel (RACH) preamble;
   the WTRU transmitting WTRU-dependent information;
   the WTRU receiving a confirmation response; and
   the WTRU transmitting a message using a common enhanced dedicated channel (E-DCH) resource if it is determined that there is no collision based on the confirmation response.
A2. The method of embodiment A1 wherein the WTRU transmits the WTRUdependent information along with the RACH preamble.
A3. The method of embodiment A1 wherein the WTRU-dependent information is at least one of a random number, a sequence randomly selected from a predetermined set of sequences, and a scrambling code randomly selected from a pre-determined set of scrambling codes.
A4. The method of embodiment A1 wherein the WTRU-dependent information is one ofa pre-configured identifier and information derived from the pre-configured identifier.
A5. The method of embodiment A4 wherein the identifier is at least one of UTRAN radio network temporary identity (U-RNTI), enhanced dedicated channel (E-DCH) radio network temporary identity (E-RNTI), high speed downlink shared channel (HS-DSCH) radio network temporary identity (H-RNTI), and international mobile subscriber identity (IMSI).
A6. The method of embodiment A1 wherein theWTRU receives the confirmation response through a high speed downlink shared channel (HS-DSCH).
A7. The method of embodiment A1 wherein the confirmation response comprises a repetition of one of the WTRU-dependent information and information derived from the WTRU-dependent information.
A8. The method of embodiment A1 wherein theWTRU receives the confirmation response through one of an E-DCH absolute grant channel (E-AGCH) and an E-DCH relative grant channel (E-RGCH).
A9. The method of embodiment A8 wherein an E-DCH radio network temporary identity (E-RNTI) is used as the confirmation response that is included in an E-RNTI specific cyclic redundancy check (CRC) attachment of the E-AGCH.
A10. The method of embodiment A8 wherein an absolute grant for the WTRU is included in the confirmation response sent through the E-AGCH.
A11. The method of embodiment A1 wherein theWTRU receives the confirmation response through an acquisition indicator channel (AICH).
A12. The method of embodiment A11 wherein the confirmation response is transmitted in 1024 chips after transmission of 4096 chips of AI.
A13. The method of embodiment A1 wherein the WTRU begins to monitor the confirmation response to evaluate a collision resolution time upon one of following triggers: reception of an acquisition indicator (AI) and resource indication, start of reception of uplink power control commands, start of transmission of downlink power control commands, declaration of physical layer channel establishment, declaration on post-verification success, and start of E-DCH transmission.
A14. A method for managing a collision in enhanced uplink for CELL_FACH transmissions, the method comprising:
   a wireless transmit/receive unit (WTRU) transmitting a random access channel (RACH) preamble;
   the WTRU receiving an acquisition indicator (AI);
   the WTRU transmitting a packet using a common enhanced dedicated channel (E-DCH) resource including WTRU-dependent information; and
   the WTRU receiving a confirmation response, wherein the WTRU determines whether a collision occurs based on the confirmation response.
A15. The method of embodiment A14 wherein the WTRU-dependent information is at least one of a random number, a sequence randomly selected from a predetermined set of sequences, and a scrambling code randomly selected from a pre-determined set of scrambling codes.
A16. The method of embodiment A14 wherein the WTRU-dependent information is one of a pre-configured identifier and information derived from the preconfigured identifier.
A17. The method of embodiment A16 wherein the identifier is at least one of UTRAN radio network temporary identity (U-RNTI), enhanced dedicated channel (E-DCH) radio network temporary identity (E-RNTI), high speed downlink shared channel (HS-DSCH) radio network temporary identity (H-RNT1), and international mobile subscriber identity (IMSI).
A18. The method of embodiment A14 wherein the WTRU receives the confirmation response through a high speed downlink shared channel (HS-DSCH).
A19. The method of embodiment A14 wherein the confirmation response comprises a repetition of one of the WTRU-dependent information and information derived from the WTRU-dependent information.
A20. The method of embodiment A14 wherein the WTRU receives the confirmation response through one of an E-DCH absolute grant channel (EAGCH) and an E-DCH relative grant channel (E-RGCH).
A21. The method of embodiment A20 wherein an E-DCH radio network temporary identity (E-RNTI) is used as the confirmation response that is included in an E-RNTI specific cyclic redundancy check (CRC) attachment of the E-AGCH.
A22. The method of embodiment A20 wherein an absolute grant for the WTRU is included in the confirmation response sent through the E-AGCH.
A23. The method of embodiment A14 wherein the WTRU begins to monitor the confirmation response to evaluate a collision resolution time upon one of following triggers: reception of an acquisition indicator (AI) and resource indication, start of reception of uplink power control commands, start of transmission of downlink power control commands, declaration of physical layer channel establishment, declaration on post-verification success, and start of E-DCH transmission.
A24. A method for avoiding a collision in enhanced uplink for CELL_FACH transmissions, the method comprising:
   a wireless transmit/receive unit (WTRU) transmitting a random access channel (RACH) preamble;
   the WTRU receiving an acquisition indication (AI);
   the WTRU randomly selecting an enhanced dedicated channel (E-DCH) resource from a set of E-DCH resources associated with an RACH resource used for transmission of the RACH preamble; and
   the WTRU transmitting a message using the selected E-DCH resource.
A25. The method of embodiment A24 wherein each E-DCH resource in the set of E-DCH resources has a different scrambling code.
A26. A method for detecting a collision in enhanced uplink for CELL_FACH transmissions, the method comprising:
   a wireless transmit/receive unit (WTRU) transmitting a random access channel (RACH) preamble;
   the WTRU receiving an acquisition indication (AI);
   the WTRU transmitting a message; and
   the WTRU receiving a confirmation response for the message.
A27. The method of embodiment A26 wherein the confirmation response contains at least one of WTRU identity, confirmation of successful reception or failure of the message, and uplink resource allocation for a dedicated channel.
A28. The method of embodiment A26 wherein the WTRU receives the confirmation response via one of a forward access channel (FACH) and a high speed downlink shared channel (HS-DSCH).
A29. Awireless transmit/receive unit (WTRU) for avoiding a collision in enhanced uplink for CELL_FACH transmissions, the WTRU comprising:
   a transceiver; and
   a controlling entity adapted to initiate a random access procedure by transmitting a random access channel (RACH) preamble, transmit WTRUdependent information, and transmit a message after it is confirmed that there is no collision based on a confirmation response received in response to the WTRU dependent information.
A30. The WTRU of embodiment A29 wherein the controlling entity transmits the WTRU-dependent information along with the RACH preamble.
A31. The WTRU of embodiment A29 wherein the WTRU-dependent information is at least one of a random number, a sequence randomly selected from a predetermined set of sequences, and a scrambling code randomly selected from a pre-determined set of scrambling codes.
A32. The WTRUof embodiment A29 wherein the WTRU-dependent information is one of a pre-configured identifier and information derived from the pre-configured identifier.
A33. The WTRU of embodiment A32 wherein the identifier is at least one of UTRAN radio network temporary identity (U-RNTI), enhanced dedicated channel (E-DCH) radio network temporary identity (E-RNTI), high speed downlink shared channel (HS-DSCH) radio network temporary identity (H-RNTI), and international mobile subscriber identity (IMSI).
A34. TheWTRU of embodiment A29 wherein the WTRU receives the confirmation response through a high speed downlink shared channel (HS-DSCH).
A35. The WTRU of embodiment A29 wherein the confirmation response comprises a repetition of one ofthe WTRU-dependent information and information derived from the WTRU-dependent information.
A36. The WTRU of embodiment A29 wherein the WTRUreceives the confirmation response through one ofan enhanced dedicated channel (E-DCH) absolute grant channel (E-AGCH) and an E-DCH relative grant channel (E-RGCH).
A37. The WTRU of embodiment A29 wherein an E-DCH radio network temporary identity (E-RNTI) is used as the confirmation response that is included in an E-RNTI specific cyclic redundancy check (CRC) attachment of the E-AGCH.
A38. The WTRU of embodiment A29 wherein an absolute grant for the WTRU is received via the E-AGCH carrying the confirmation response.
A39. The WTRUof embodiment A29 wherein the WTRU receives the confirmation response through an acquisition indicator channel (AICH).
A40. The WTRU of embodiment A39 wherein the confirmation response is transmitted in 1024 chips after transmission of 4096 chips of AI.
A41. The WTRU of embodiment A29 wherein the WTRU begins to monitor the confirmation response to evaluate a collision resolution time upon one of reception of an acquisition indication (AI) and resource indication, start of reception of uplink power control commands, start of transmission of downlink power control commands, declaration of physical layer channel establishment, declaration on post-verification success, and start of E-DCH transmission.
A42. A wireless transmit/receive unit (WTRU) for managing a collision in enhanced uplink for CELL_FACH transmissions, the WTRU comprising:
   a transceiver; and
   a controlling entity adapted to initiate a random access procedure by transmitting a random access channel (RACH) preamble, transmit a message using a common enhanced dedicated channel (E-DCH) resource along with WTRU-dependent information, and determine whether a collision occurs based on a confirmation response received in response to the WTRU-dependent information.
A43. The WTRU of embodiment A42 wherein the WTRU-dependent information is at least one of a random number, a sequence randomly selected from a predetermined set of sequences, and a scrambling code randomly selected from a pre-determined set of scrambling codes.
A44. The WTRUof embodiment A42 wherein the WTRU-dependent information is one of a pre-configured identifier and information derived from the pre-configured identifier.
A45. The WTRU of embodiment A44 wherein the identifier is at least one of UTRAN radio network temporary identity (U-RNTI), enhanced dedicated channel (E-DCH) radio network temporary identity (E-RNTI), high speed downlink shared channel (HS-DSCH) radio network temporary identity (H-RNTI), and international mobile subscriber identity (IMSI).
A46. The WTRU of embodiemnt A42 wherein the WTRUreceives the confirmation response through a high speed downlink shared channel (HS-DSCH).
A47. The WTRU of embodiment A42 wherein the confirmation response comprises a repetition of one of theWTRU-dependent information and information derived from the WTRU-dependent information.
A48. The WTRU of embodiment A42 wherein the WTRU receives the confirmation response through one of an E-DCH absolute grant channel (E-AGCH) and an EDCH relative grant channel (E-RGCH).
A49. The WTRU of embodiment A42 wherein an E-DCH radio network temporary identity (E-RNTI) is used as the confirmation response that is included in an E-RNTI specific cyclic redundancy check (CRC) attachment of the E-AGCH.
A50. The WTRU of embodiment A42 wherein an absolute grant for the WTRU is received via the E-AGCH carrying the confirmation response.
A51. The WTRU of embodiment A42 wherein the WTRU begins to monitor the confirmation response to evaluate a collision resolution time upon one of reception of an acquisition indication (AI) and resource indication, start of reception of uplink power control commands, start of transmission of downlink power control commands, declaration of physical layer channel establishment, declaration on post-verification success, and start of E-DCH transmission.
A52. Awireless transmit/receive unit (WTRU) for avoiding a collision in enhanced uplink for CELL_FACH transmissions, the WTRU comprising:
   a transceiver; and
   a controlling entity adapted to randomly select an enhanced dedicated channel (E-DCH) resource from a set of E-DCH resources associated with a random access channel (RACH) resource used for transmission of a RACH preamble and transmit a message using the selected E-DCH resource.
A53. The WTRU of embodiment A52 wherein each E-DCH resource in the set of E-DCH resources has a different scrambling code.
A54. A wireless transmit/receive unit (WTRU) for detecting a collision in enhanced uplink for CELL_FACH transmissions, the WTRU comprising:
   a transceiver; and
   a controlling entity adapted to transmit a random access channel (RACH) preamble and a message and determine whether a collision occurs based on a confirmation response for the message.
A55. TheWTRUof embodiment A54 wherein the confirmation response contains at least one of WTRU identity, confirmation of successful reception or failure of the message, and uplink resource allocation for a dedicated channel.
A56. TheWTRU of embodiment A54 wherein the WTRU receives the confirmation response via one of a forward access channel (FACH) and a high speed downlink shared channel (HS-DSCH).
A57. A method for avoiding a collision in enhanced uplink for CELL_FACH transmissions, the method comprising:
   receiving a random access channel (RACH) preamble;
      transmitting an acquisition indication (AI) in response to the received RACH preamble;
   receiving WTRU-dependent information; and
   transmitting a confirmation response in response to the WTRU-dependent information.
A58. The method of embodiment A57 wherein the confirmation response is sent along with the AI.
A59. The method of embodiment A57 wherein the confirmation response is sent through a high speed downlink shared channel (HS-DSCH).
A60. The method of embodiment A57 wherein the confirmation response comprises a repetition of one of the WTRU-dependent information and information derived from the WTRU-dependent information.
A61. The method of embodiment A57 wherein the confirmation response is sent through one of an E-DCH absolute grant channel (E-AGCH) and an E-DCH relative grant channel (E-RGCH).
A62. The method of embodiment A57 wherein the confirmation response is sent through an acquisition indicator channel (AICH).
A63. A method for supporting detection of a collision in enhanced uplink for CELL_FACH transmissions, the method comprising:
   receiving a random access channel (RACH) preamble;
   transmitting an acquisition indication (AI) in response to the RACH preamble;
   receiving a random access channel (RACH) message; and
   transmitting a confirmation response for the RACH message.
A64. The method of embodiment A63 wherein the confirmation response contains at least one of WTRU identity, confirmation of successful reception or failure of the RACH message, and uplink resource allocation for a dedicated channel.
A65. The method of embodiment A63 wherein the confirmation response is sent via one of a forward access channel (FACH) and a high speed downlink shared channel (HS-DSCH).
A66. An apparatus for supporting detection of a collision in enhanced uplink for CELL_FACH transmissions, the apparatus comprising:
   a transceiver; and
   a controlling entity configured to transmit a confirmation response in response to WTRU-dependent information for confirming that an acquisition indicator (AI) is intended to a particular wireless transmit/receive unit (WTRU).
A67. The apparatus of embodiment A66 wherein the confirmation response is sent along with the AI.
A68. The apparatus of embodiment A66 wherein the confirmation response is sent through a high speed downlink shared channel (HS-DSCH).
A69. The apparatus of embodiment A66 wherein the confirmation response comprises a repetition of one of the WTRU-dependent information and information derived from the WTRU-dependent information.
A70. The apparatus of embodiment A66 wherein the confirmation response is sent through one of an enhanced dedicated channel (E-DCH) absolute grant channel (E-AGCH) and an E-DCH relative grant channel (E-RGCH).
A71. The apparatus of embodment A66 wherein the confirmation response is sent through an acquisition indicator channel (AICH).
A72. An apparatus for supporting detection of a collision in enhanced uplink for CELL_FACH transmissions, the apparatus comprising:
   a transceiver; and
   a controlling entity configured to receive a random access channel (RACH) message and transmit a confirmation response for the RACH message.
A73. The apparatus of embodiment A72 wherein the confirmation response contains at least one of wireless transmit/receive unit (WTRU) identity, confirmation of successful reception or failure of the RACH message, and uplink resource allocation for a dedicated channel.
A74. The apparatus of embodiment A72 wherein the confirmation response is sent via one of a forward access channel (FACH) and a high speed downlink shared channel (HS-DSCH).

## Claims

1. A method for controlling enhanced dedicated channel (E-DCH) transmissions in cell forward access channel (CELL_FACH) state, the method comprising:
receiving a first message that comprises wireless transmit/receive unit (WTRU)-dependent information associated with a first WTRU; and
upon determining that the WTRU-dependent information is included in the first message, sending the WTRU-dependent information associated with the first WTRU on an E-DCH absolute grant channel (E-AGCH) indicating that the first WTRU is free to use a common E-DCH resource in CELL_FACH state.

2. The method of claim 1, wherein the first message is received via the common E-DCH resource.

3. The method of claim 1, further comprising:
receiving a second message that comprises WTRU-dependent information associated with a second WTRU; and
determining whether to grant the common E-DCH resource to the first WTRU, wherein the WTRU-dependent information associated with the first WTRU is sent upon a determination to grant the common E-DCH resource to the first WTRU.

4. The method of claim 1, wherein the WTRU-dependent information comprises an enhanced dedicated channel (E-DCH) radio network temporary identity (E-RNTI).

5. A network entity for controlling enhanced dedicated channel (E-DCH) transmissions in cell forward access channel (CELL_FACH) state, the network entity comprising:
a processor configured to:
receive a first message that comprises wireless transmit/receive unit (WTRU)-dependent information associated with a first WTRU; and
upon determining that the WTRU-dependent information is included in the first message, send the WTRU-dependent information associated with the first WTRU on an E-DCH absolute grant channel (E-AGCH) indicating that the first WTRU is free to use a common E-DCH resource in CELL_FACH state.

6. The network entity of claim 5, wherein the processor is configured to receive the first message on the common E-DCH resource.

7. The network entity of claim 5, wherein the processor is further configured to:
receive a second message that comprises a second WTRU-dependent information associated with a second WTRU; and
determine whether to grant the common E-DCH resource to the first WTRU, wherein the WTRU-dependent information associated with the first WTRU is sent upon a determination to grant the common E-DCH resource to the first WTRU.

8. The network entity of claim 5, wherein the WTRU-dependent information comprises an enhanced dedicated channel (E-DCH) radio network temporary identity (E-RNTI).

9. A wireless transmit/receive unit (WTRU) for avoiding a potential collision while operating in cell forward access channel (CELL_FACH) state, the WTRU comprising:
a processor configured to:
add wireless transmit/receive unit (WTRU)-dependent information associated with the WTRU to a message;
send the message via a common E-DCH resource; and
monitor an E-DCH absolute grant channel (E-AGCH) for the WTRU-dependent information associated with the WTRU.

10. The WTRU of claim 9, wherein the processor is further configured to:
send a random access preamble; and
receive an acquisition indicator (AI), wherein the WTRU-dependent information associated with the WTRU is added to the message upon receiving the AI.

11. The WTRU of claim 9, wherein the WTRU-dependent information comprises an enhanced dedicated channel (E-DCH) radio network temporary identity (E-RNTI) associated with the WTRU.

12. The WTRU of claim 9, wherein the processor is further configured to:
receive an absolute grant on the E-AGCH, wherein the absolute grant comprises the WTRU-dependent information associated with the WTRU.

13. The WTRU of claim 9, wherein the processor is further configured to:
determine that a collision has occurred when an absolute grant that comprises the WTRU-dependent information associated with the WTRU is not received within a collision resolution time.

14. A method for avoiding a potential collision while operating in cell forward access channel (CELL_FACH) state, the method comprising:
adding wireless transmit/receive unit (WTRU)-dependent information associated with a WTRU to a message;
sending the message via a common E-DCH resource; and
monitoring an E-DCH absolute grant channel (E-AGCH) for the WTRU-dependent information associated with the WTRU.

15. The method of claim 14, further comprising:
sending a random access preamble; and
receiving an acquisition indicator (AI), wherein the WTRU-dependent information associated with the WTRU is added to the message upon receiving the AI.

16. The method of claim 14, wherein the WTRU-dependent information comprises an enhanced dedicated channel (E-DCH) radio network temporary identity (E-RNTI) associated with the WTRU.

17. The method of claim 14, further comprising:
receiving an absolute grant on the E-AGCH, wherein the absolute grant comprises the WTRU-dependent information associated with the WTRU.

18. The method of claim 14, further comprising:
determining that a collision has occurred when an absolute grant that comprises the WTRU-dependent information associated with the WTRU is not received within a collision resolution time.
